# EUROPEAN PATENT APPLICATION

(11) **EP 0 878 777 A2**
(43) Date of publication of application: **18.11.1998**
(21) Application number: 98303591.6
(22) Date of filing: 07.05.1998
(51) Int. Cl.: G06T 5/40

(54) **Method for enhancement of reduced color set images**

(30) Priority: 09.05.1997 US 854279
(71) Applicant: XEROX CORPORATION, Rochester, New York 14644 (US)
(72) Inventor: Eschbach, Reiner, Webster NY 14580 (US); Fuss, William A., Rochester NY 14612 (US)
(74) Representative: Skone James, Robert Edmund

(57) **Abstract**

A method of improving the range of color images which can be processed by multiple enhancement processing elements, and improving image quality of limited color set images. The inventive method determines (107) the number of colors that form an image, and with that information, adds a control function to one or more enhancement processors (112,122,132), which, based on a number of colors, increases and/or decreases the effect of the enhancement function. In doing so, the range of color images which can be handled is increased.

## Description

The present invention is directed toward a method and apparatus for improving the appearance of a digital image having a pictorial scene, and more particularly, toward improving images that are low color quality representations of natural scene images.

In the past, a typical application for copiers or scan-to-print image processing systems was to reproduce an input image as accurately as possible, i.e., render a copy. Thus, copies have been rendered as accurately as possible, flaws and all. However, as customers become more knowledgeable in their document reproduction requirements, they recognize that an exact copy is often not what they want. Instead, they would rather obtain the best possible document output. Until recently, image quality from the output of a copier or a scan-to-print system was directly related to the input document quality. One very common set of input documents includes photographs. Unfortunately, photography is an inexact science, particularly among amateurs, and original photographs are often poor. Alternately, technology, age or image degradation variations often result in pictures having an unsatisfactory and undesirable appearance. What is desired then, is a copy giving the best possible picture, and not necessarily a copy of the original.

Image enhancement, as used herein, refers only to processes which improve the output quality of the image, and not to internal operations, necessitated by particular processor limitations. Thus, for example, changing TRC for better reproduction of an image is an enhancement operation. However, reducing the number of colors representing image to place an image into a particular file format, such as .GIF files, or .BMP files, is not an enhancement operation.

Photography has long dealt with this issue. Analog filters and illumination variations can improve the appearance of pictures in the analog photographic process. Thus, for example, yellow filters enhance the appearance of white clouds against a blue sky in black and white images. Further, various electrophotographic devices, including digital copiers, can clean up and improve images by adjustment of threshold, filtering, or background suppression. Generally, these methods are manual methods which a user must select on an image by image basis. Unfortunately, the casual user is not skilled enough to perform these operations. The inability to perform image enhancement operations is exacerbated when additionally dealing with color controls.

Three possible choices are presented by the art in the area of image enhancement. In the first case, we can do nothing. Such a system is a stable system, in that it does no harm to an image. This is a common approach taken to reproduction. However, the output documents of such a system are sometimes not satisfactory to the ultimate customer.

In a second case of image enhancement, the image can always be processed. It turns out that an improvement can usually be made to an image if certain assumptions are made that are accurate for most cases. In an exceptionally large set of images, increasing contrast, sharpness, and/or color saturation, will improve the image. This model tends to produce better images, but the process is unstable, in that for multi-generation copying, increases in contrast, saturation, or sharpness are undesirable and ultimately lead to a severe image degradation. Further, the process may undesirably operate on those images which are good ones.

Accordingly, we arrive at our third case of image enhancement, a process of automated image enhancement which operates to vary images which are not perceived as good images, but does not operate on images which do not need to be improved.

Many improvements can be made to an image, including luminance enhancement (e.g. US-A 5,450,502); sharpness enhancement (e.g., US-A 5,363,209); exposure adjustment (e.g. US-A 5,414,538); color balance correction (e.g., US-A 5,357,352, US-A 5,371,615) or contrast enhancement (US-A 5,581,370); color saturation correction (e.g. US-A 5,450,217), etc. These processes can be used together in a predictive mode that does not require iterative processing (e.g. US-A 5,347,374). Generally, these processing methods operate by modifying a set of reproduction curves (TRCs). The output image is achieved by using TRC curves, operating either on the luminance channel of an image expressed LC₁C₂ coordinates, or preferably on each channel in a color density space description of the image in Red-Green-Blue (rgb) coordinates.

Unfortunately, the set of possible color images that can be enhanced is large, and varied. Problems are encountered in using complex systems having multiple enhancement processors as described, particularly where a prior process has reduced continuous tone images to an images having only limited number of colors. This limited color set images are often encountered in situations where images are retrieved from image archives and in situations, where the images are used as backgrounds or pictograms. Images with a limited set of colors cause problems, because the process algorithms assume normal color distributions, but when confronted with limited color set, make inappropriate changes. These limited color set images, which are not strictly speaking natural color images, do not respond well to some of the enhancement operators. On the other hand, processor optimized for limited color set images do not operate satisfactorily for natural color continuous tone images. Since low color set images provide only unreliable image statistics, image processing operations have to be adapted to the statistical uncertainties and not full advantage can be taken of the processes when compared to the use of reliable image statistics. It would be highly desirable to determine a way to reliably use the same processors throughout a more substantial portion of the set of color images.

In accordance with the present invention, a method of controlling an image enhancement processing comprises creating a signal indicative of the number of colors in an image; and using said signal to modify the enhancement processing thereof.

There is provided a method of improving the range of color images which can be processed by multiple enhancement processing elements, and improving image quality of limited color set images.

The inventive method determines the number of colors that form an image, and with that information, adds a control function to one or more of the enhancement processors, which, based on a number of colors, increases and/or decreases the effect of the enhancement function. In doing so, the range of color images which can be handled is increased.

These and other aspects of the invention will become apparent from the following descriptions used to illustrate the preferred embodiment of the invention, read in conjunction with the accompanying drawings in which:
Figure 1 shows a block diagram of a system employing the present invention;
Figure 2 shows a block diagram of the processing system described; and
Figures 3 and 4 illustrate exposure control using the inventive concept.

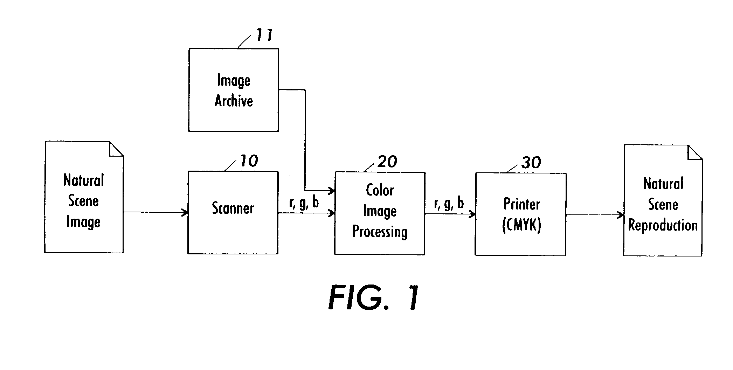

Referring now to the drawings where the showings are for the purpose of describing the embodiment of the invention and not for limiting same, reference is made to Figure 1 and the scan-to-print and archive-to-print system shown therein in which the present invention may find advantageous use.

Figure 1 illustrates a scanner 10 which may conveniently be a black and white or color scanner which produces image signals defined in either RGB space for color images or density space for black and white images. Alternatively images may come from an image archive 11, where images are not necessarily idealized, and may represent unusual scenes or images. These images of concern are pictorial in nature, i.e., they represent "natural scenes", but they may be limited in their composition or may be problematic with their use. Included in this discussion are images used as "background " or "wallpaper" in computer displays. Another source of images are clipart archives, which represent large sets of inexpensively obtained images, which may not be readily available in an output that the user will like. While certain computer generated imagery may qualify as representing nature scenes, the contemplated images are predominantly scanned photographs. The images themselves are defined in terms of pixels, wherein each pixel has a gray value which varies between a white level and a black level. In a currently desirable system, in which calculations may be done on 8 bits of information, 256 levels of gray will be available for use. When each separation in r,g,b space is used, this allows 24 bits color, and over 16 million colors. Pixels are also identified in terms of position, i.e., a pixel defines a unique area within the image, identified by its position in a scan line, and the scan line position in a page. Color is therefore represented by triplets of gray pixels for each color pixel in the image, each triplet of gray pixel defining the color in each separation, which together form the color pixel.

Color may also be defined by an image file perhaps received from another source, using less than 256 levels of gray, and in some situations, allowing only 256 colors. Additionally, the number of describable colors/gray levels in an image is only the maximum number of possible colors and in a large number of cases, only a small subset of the allowed colors is actually used. This is often the case in images that are intended as background images, pictograms, etc. or in images that were intended for use on the World Wide Web.

The described color images may be directed to an automated image enhancement system which will be further defined herein. For our purposes, the automated image enhancement system may include a segmentation system which can identify within a document a type of image or image object, including pictorial and non-pictorial image areas or objects. It will be assumed that the output of the automated image enhancement system that is described herein will be directed to a printer, CRT, or like device. These devices may have many distinct characteristics and may be laser printers, or ink jet printers or LED displays or CRT displays. However, they have as a common requirement the representation of gray pictorial images. This may be done with gray printing or pseudo gray printing.

In terms of deriving data for operation by the present image enhancement system, a prescan may be performed on a document placed on a copying platen and scanned by the electro-optical system of the scanner to produce a signal representing the document image. Alternatively, the image may be directed to the automated image enhancement system from a memory, having previously been scanned or derived some other system, in which case, the received image is sampled as required. The prescan is optionally undersampled, i.e., the image need not be sampled at the ultimate resolution of the system for the purposes of enhancement. In practice, it has been determined that a relatively small number of pixels representative of and dispersed through the entire image can accurately represent the image for this purpose. In one particular embodiment, we use a block of pixels derived from the image, in approximately 512 pixels x 512 pixels. The primary purpose of this selection is to improve the speed at which a software image enhancement system can process the pictorial images. Sampling at common image resolutions does not improve the results noted in the inventive process herein described significantly, and dramatically increases the software processing time required. Some embodiments of the described inventive process might decide not to undersample the image, e.g., when the input image size is actually small, or when a hardware acceleration is used.

The input image color signals are edited, or enhanced and prepared for printing at color image processing unit 20, which in Figure 1 provides as an output r, g, b signals. Printer 30 receives the signal from color image processing unit 20, and provides for conversion of the signals to printer driver signals, commonly given in terms of the colorants that will be used in reproduction, typically Cyan, Magenta, Yellow and Key or black (CMYK). The printer has an output of the natural scene image, which, hopefully, matches user expectations of a "good" output image. Alternatively, the processed image from color image processing unit 20 is displayed on a television screen, CRT display or the like.

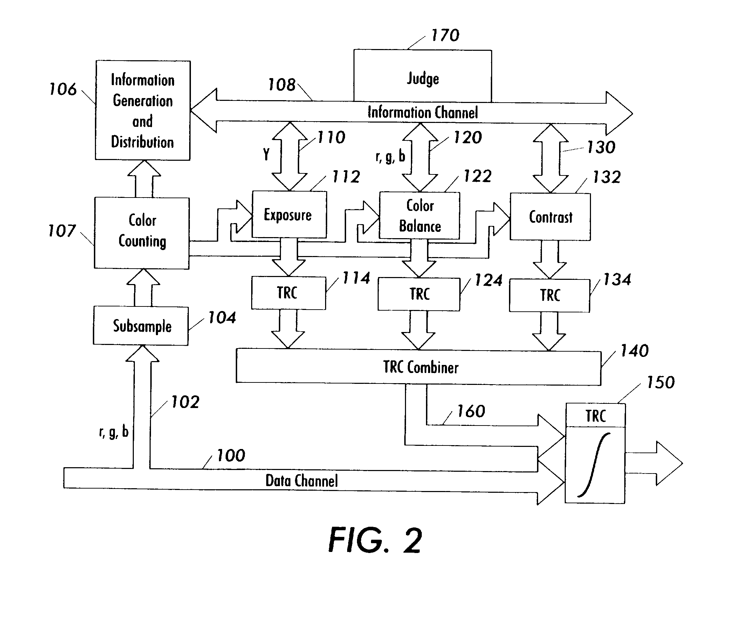

For the description of the remainder of the process of the invention, reference is made to the image of Figure 2. Data channel 100 is a bus which carries image data, conveniently in terms of rgb color density signals. Enhancement channel 102 carries data from data channel 100 to subsampler 104, which as described, optionally undersamples the data and delivers it to information generation and distribution 106 which accomplishes the common functions required for all the enhancement modules, and which may conveniently be derived at the same time. Accordingly, information generation and distribution 106 accomplishes conversion of the image from RGB space to luminance space - or an approximation thereof, derives histograms of signals as required, globally and/or locally, and determines such other data as required by any enhancement operators used in the system.

The color image data initially received from scanner 10 or the like, is assumed to be in RGB space initially, i.e., red-green-blue space, and for the inventive process, must initially be converted to luminance space (e.g. Y in YC₁C₂ space, a similar luminance/chrominance-like value, or an approximation thereof) at information generation and distribution 106. It is possible that the image will already be in luminance space, as it is common to convert RGB values to luminance/chrominance space for other image processing. YC₁C₂ space is a useful space in which the inventive process can be performed, and Xerox YES space is one possible embodiment of such a space. Whatever space is used must have a component which relates to the human visual perception of lightness or darkness, such as Y of Xerox YES of the "Xerox Color Encoding Standard," XNSS 289005, 1989. In the following, the invention will be described using the Xerox YES color space, although it is not limited thereto.

In addition to the above described operation, at block 107, the colors present in the image are counted. Generally speaking, continuous tone images will have a large number of colors, and limited color set images will have less than e.g.: 256 colors. We have selected 256 as a reasonable threshold for the operations that will be described. It will be appreciated that it is possible to represent limited color set images in 24 bit color space, but the image will not use all of the possible colors. On reading the data, a count of the different colors is kept, optionally including a color/Black & White indicator. A count value, or an indication of whether a count exceeds a preselected threshold is output by color counter 107.

From information generation and distribution 106, data is made available on information channel 108, which carries multiple signals to each correction module buses 110, 120 and 130, including the information about the number of colors in the image and the optional color/Black & White indicator. Correction processor buses 110, 120 and 130, respectively, forward signals required for operation, for example, only, to exposure processor 112, color balance processor 122 and contrast processor 132, and likewise return information to information channel 108 as required. Each of exposure processor 112, color balance processor 122 and contrast processor 132 use the data supplied via information channel 108 to calculate the signals for TRC generators 114, 124 and 134 respectively, to generate TRC's reflecting required image modification determined at each processor. However, in accordance with the invention, the output of each of the processors is altered based on the number of colors found in the image being processed as received from 106. Each of TRC generators 114, 124 and 134 directs generated TRC's to TRC combiner 140, which combines the generated TRC's into a single look up table and stores the results at TRC controller 150 via bus 160. TRC controller 150 applies the changes to the rgb signals on bus 100 as required. Judge or arbiter 170 operates to resolve conflicts in the TRC determination, so that processors 112, 122 and 132 do not operate at cross purposes. The output of TRC controller 150 might be directed to a sharpness adjustment stage, such as that described in US-A 5,363,209. The output of the TRC controller 150 might have a number of bits different from the original number of bits in the image. This is specially useful if the output is directed to a sharpness adjustment stage that optionally incorporates a reduction in the number of bits, say from 10 bits to 8 bits.

It will, of course, be appreciated that the principle of the invention applies to any enhancement operation, and thus, while only three enhancement processors are illustrated here, additional processors or different combinations of process, as described in the background, may be used.

Exposure processor 112 and contrast processor 132 both operate on the luminance histogram, and preferably operate in order of exposure, first, and contrast, second. Accordingly, after directing the exposure signal to TRC generator 114, the exposure signal produced at exposure processor 110 is directed to information generation and distribution 106 via information channel 108. This signal is used to generate a modified histogram according to the determined exposure adjustment. This modified histogram is subsequently filtered with a blur or smoothing function, such as an averaging over about 10 adjacent levels, to blur or smooth peaks naturally resulting in the modified luminance histogram due to exposure adjustment. It should be noted that the operation of this filter can be modified for increased or decreased smoothing. It also appears to be desirable to modify the filter operation based on the amount of correction to the histogram at the exposure processor. The blurred modified histogram is then forwarded to contrast processor 132, via information channel 108 and correction processor bus 130.

In one possible implementation of the invention, a map of sensitivity of the respective analyzers/processors, (an evaluation that represents the likelihood of improper processing if the image file is a reduced color set image for the used analyzer/processor combinations) has determined the following order, from most sensitive to least sensitive:
1. color balance
2. sharpness
3. saturation
4. contrast
5. exposure

For a color implementation, the processor outputs are modified with an additional "color map processing table" (available in each processor and responsive to the color count value) that governs the processing of mapped images. Alternatively, the processor might be maintained, but modified data, resulting in the desired operation, is outputted from the analyzer. In this table, the following processing is encoded:

### C1. Color Balance:

For images of 256 colors and less, the color balance processing unit is deactivated.

### C2. Sharpness:

For images of 256 colors and less, the sharpness processing is limited to 25% of normal operation, and at 128 colors all sharpness processing is deactivated.

### C3. Saturation:

For images of 256 colors or less, saturation processing is limited to 50% of normal operation, and at 128 colors all saturation processing is deactivated.

### C4. Contrast:

For images of 256 colors or less, contrast is switched to "save mode processing". At 128 colors processing is deactivated.

### C5. Exposure:

For images of 64 colors and less, the processing is limited to 75% of normal operation, and at 16 colors processing is deactivated.

For black & white images, the corresponding scheme is used. Here only contrast, exposure and sharpness are modified and an example for the settings is:

### G1. Exposure:

For images with less than 64 levels of gray, exposure enhancement is reduced to 75%

### G2. Sharpness;

For images with less than 64 levels of gray, sharpness enhancement is less than 25%, and at less than 32 levels of gray, sharpness is turned off.

### G3. Contrast:

For images of 64 levels of gray or less, contrast is switched to "save mode processing" (see, US-A 5,450,502, processing of images with high global variances, specifically incorporated herein by reference), and at less than 32 levels of grays, contrast enhancement is turned off.

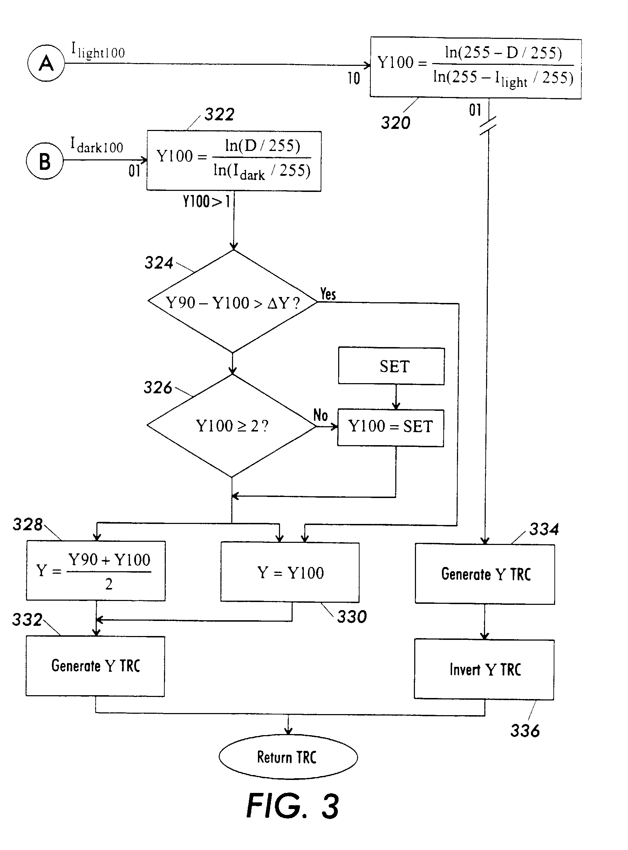

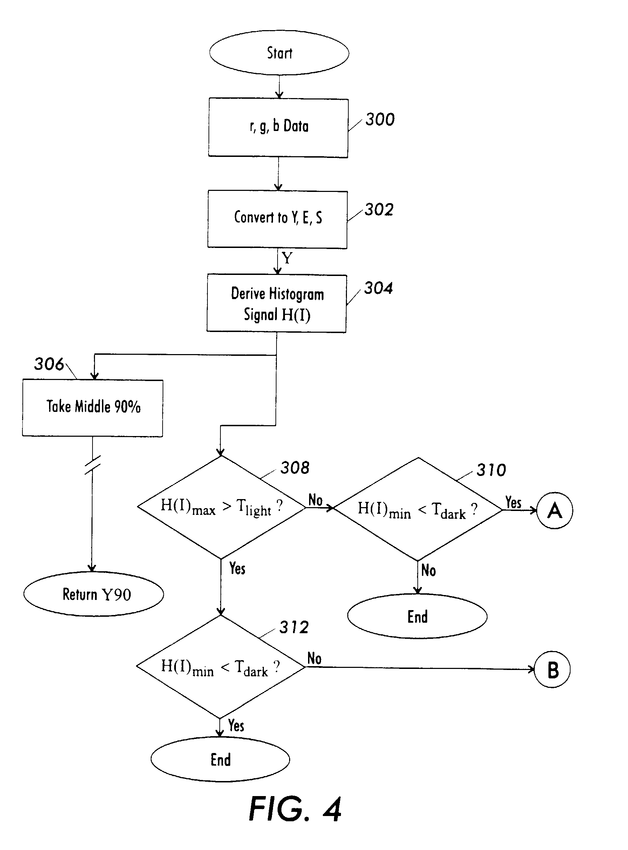

In looking at one example of how this process limitation is obtained, reference is made to US 5,363,209 to Eschbach and the changes which would be implemented therein. Figures 3 and 4 show a flow chart of the inventive process at step 300, r, g, b data is received. At step 302, the r, g, b data is converted to YES values. At step 304, histogram signal H(I) is derived from the Y signal. At steps 306 and 308 the process branches into processing the 100% range and the 90% range of H(I). Between steps 308, 310 and 312 the maximum value of H(I), I light100, and the minimum value of H(I), I dark100, is compared respectively to threshold Tlight and T dark to determine whether to continue processing the image. Depending on the response, (noting the "yes" response of step 312 and the "no" response of step 310 that end the process) a value for gamma is derived by evaluating equation 12 at steps 322 for the case of the image being too light and 320 for the case of the image being too dark. At step 324 the preliminary values for gamma 100 and gamma 90 are compared to find a disagreement, where a disagreement is reached when the difference between gamma 90 and gamma 100 is larger than a preset value DELTA gamma, where a DELTA gamma value of 0.5 has been found to give good results in the embodiment outlined in Figures 3 and 4. If a disagreement is detected, the gamma 90 value is ignored and only the gamma 100 value is used for further processing. At step 326, the gamma 100 value is compared to a preset value. In this case gamma 100 </= 2 has been found to give good results. However, in accordance with the invention, variations in gamma 100 are limited to gamma100 </=1.25 for reduced color set images (colors where the count is less than 64, in the example) where gamma100 is 1 provides a no-op, or no operation. This value is set in the process, based on the counted color value. The remaining process proceeds as in US-A 5,414,538. It should be noted that the system described in Figure 2 is one possible implementation of a cascaded image enhancement system making use of the described inventive method. An alternate approach could locate the inventive method of altering the response of the enhancement processors in individual modules, which operate independently upon the image.

It will no doubt be appreciated that the present invention may be accomplished with either software, hardware or combination software hardware implementations.

## Claims

1. A method of controlling an image enhancement processing, comprising the steps of:
creating a signal indicative of the number of colors in an image; and
using said signal to modify the enhancement processing thereof.

2. The method as defined in claim 1, and including the step of:
determining whether the image is a black and white image, or a color image; and,
controlling said enhancement processing modification in accordance with said determination.

3. The method as defined in claim 1 or claim 2, wherein a plurality of distinct enhancement processing options are available, and including:
differentially controlling said distinct enhancement processing options, using said signal.
